# EUROPÄISCHE PATENTSCHRIFT

(11) **EP 1 872 309 B1**
(45) Veröffentlichungstag und Bekanntmachung des Hinweises auf die Patenterteilung: **09.07.2008**
(21) Anmeldenummer: 06721219.1
(22) Anmeldetag: 20.04.2006
(51) Int. Cl.: G06K 19/067

(54) **MESSWERTAUFNEHMER MIT ZUMINDEST EINEM SAW-ELEMENT**
MEASURING SENSOR WITH AT LEAST ONE SAW (SURFACE ACOUSTIC WAVE) ELEMENT
TRANSDUCTEUR PRESENTANT AU MOINS UN ELEMENT SAW

(30) Priorität: 21.04.2005 AT 248005 U
(43) Veröffentlichungstag der Anmeldung: 02.01.2008
(73) Patentinhaber: AVL List GmbH, 8020 Graz (AT)
(72) Erfinder: REINDL, Leonhard, Michael, 79199 Kirchzarten (DE); HAUSER, Robert, A-9551 Bodensdorf (AT); BRUCKNER, Gudrun, 9241 Wernberg (AT); STRMSEK, Robert, 2311 Hoce (SI); FRIEDL, Alexander, 2000 Maribor (SI)
(74) Vertreter: Pinter, Rudolf
(86) Internationale Anmeldenummer: PCT/AT2006/000161
(87) Internationale Veröffentlichungsnummer: WO 2006/110936

(56) Entgegenhaltungen:
- WO-A-20/05095895
- BRUCKNER: "High temperature stable SAW based tagging system for identifying a pressure sensor" IEEE FREQ. CONTR. SYMP., 2003, Seite 942, XP002390778 in der Anmeldung erwähnt

## Beschreibung

Die Erfindung betrifft einen Messwertaufnehmer mit zumindest einem SAW-Element als Sensor und/oder Identifikationseinheit, mit einem im wesentlichen einen Koaxialleiter bildenden Gehäuseteil, in dem das SAW-Element kontaktfrei eingebaut ist, und der mit dem Schirm des Anschlusskabels verbunden ist, dessen Signalleiter berührungslos zumindest annährend mittig über einer oberflächlichen Koppelstruktur des SAW-Elementes verläuft und zur Nahfeldkopplung des elektromagnetischen Feldes im Koaxialleiter mit dem SAW-Element dient.

Messwertaufnehmer der genannten Art sind grundsätzlich beispielsweise aus AT 5.042 U2 bekannt und bieten den Vorteil, dass die Speicherung der teilweise sehr umfangreichen sensorrelevanten Daten aus dem unmittelbaren Nahbereich des Sensors mit den dort oft herrschenden hohen Temperaturen, Vibrationen und sonstigen Störungen ausgelagert werden kann, wobei im bzw. am Sensor selbst nur eine Identifikationseinheit mit einer mit der Speichereinheit für die sensorrelevanten Daten korrelierbaren Sensorkennung mit nur wenigen Identifikationsdaten verbleibt. Diese wenigen, und damit auch in gegenüber rauhen Umgebungsbedingungen unkritischen, einfachen Elementen speicherbaren Identifikationsdaten (z.B. ein einfacher Binärcode) verbleiben physisch fest mit dem Sensor verbunden, während die sonstigen sensorrelevanten Daten (wie etwa Empfindlichkeitskurven, Kalibrierdaten und dgl.) in der ausgelagerten Speichereinheit vorliegend sind, wobei zur Sicherstellung der Zusammengehörigkeit von Speichereinheit und Sensor nur die Überprüfung der einfachen Sensorkennung auf Zugehörigkeit erforderlich ist.

Abgesehen von verschiedenen einfachen, in der genannten AT 5.042 U2 auch angesprochenen Ausbildungen der Identifikationseinheit am Sensor kann diese wie eingangs beschrieben auch mit bekannten SAW-Elementen ausgeführt werden. Die Verwendung von akustischen Obertlächenwellen-Elementen (surface acoustic wave, SAW) als Sensoren und/oder Identifikationsmarken (ID-Marken) ist seit geraumer Zeit bekannt. Neuere Arbeiten (z.B. Bruckner et.al, Proc. 2003 IEEE Freq. Contr. Symp., 942 ff.) haben gezeigt, dass derartige Systeme besonders geeignet sind, als ID-Marken und/oder zur Überwachung von physikalischen oder chemischen Parametern in existierende technische Systeme eingebaut zu werden. Besonders vorteilhaft dabei ist, dass derartige Systeme vollständig passiv betrieben werden können, d.h. keine Energieversorgung, wie beispielsweise eine Batterie, im Bereich der ID-Marke bzw. des Sensors erforderlich ist. Weiters sind SAW-Elemente thermisch und mechanisch robust, hochgradig miniaturisierbar und in Form und Design an spezifische Anwendungen anpassbar.

Es ist aus einer Vielzahl von Publikationen bekannter Stand der Technik, SAW-Elemente galvanisch oder über elektromagnetische Fernfeldkopplungen mittels für die jeweilige Anwendung besonders vorteilhafter Antennen mit dem Sende/Empfangsteil zu koppeln. Gleichfalls ist es aus z.B. EP 0827105 und EP 0502079 bekannt, eine (transformatorische) Kopplungsschleife in die Oberflächenstrukturen des SAW-Elements zu integrieren und die Energie- bzw. Signalübertragung über eine induktive Nahfeldkopplung zu realisieren. Die Sende/Empfangsantenne stellt dabei eine zur schleifenförmig aufgebauten integrierten Antenne deckungsgleich ausgeführte und justierte Leiterschleife dar. Diese bekannten technischen Lösungen sind hinreichend und vorteilhaft für eine Vielzahl technischer Anwendungen. Nicht gut geeignet sind die bekannten Kopplungsmethoden hingegen für den Einbau von SAW-Elementen in geschlossene Systeme, wie beispielsweise Druck-Sensoren für Spritzgusswerkzeuge oder zur Zylinder-Innendruckmessung in Verbrennungsmotoren, insbesonders wenn diese kompakt aufgebaut sind. Die Integration von SAW-Elementen in derartige Gast-Systeme, beispielsweise zur Verwendung als (passive) ID-Marken und/oder Sensoren zur Überwachung physikalischer (beispielsweise Temperatur, magnetische Feldstärken, etc.) und/oder chemischer Parameter (beispielsweise Atmosphärenbestandteile, thermische Zersetzungsprodukte, etc.) stellt einen beträchtlichen (potentiellen) Mehrwert dar.

Allen derartigen Anwendungen gemeinsam ist, dass das SAW-System eine Ergänzung eines vorhandenen Systems darstellt. Das bedeutet, dass das SAW-Gesamtsystem, bestehend aus einer Sende/Empfangseinheit und dem, oder den, eigentlichen SAW-Element(en) - in der Regel - ohne Änderung der beispielsweise elektrischen oder auch einbautechnischkonstruktiven Eigenschaften des zu identifizierenden und/oder zu überwachenden Gast-Systems zu integrieren ist.

Eine Ankopplung über eine galvanische Verbindung, d.h. ein Kabel mit direktem elektrischem Kontakt zum SAW-Element, ist in vielen Fällen nicht möglich ohne das eigentliche Nutzsignal des Gast-Systems in unzulässiger Weise zu beeinflussen. Weiters ist eine galvanische Kopplung bei kompakten Systemen oft nur mit hohem Aufwand bei Produktion bzw. Zusammenbau zu realisieren und/oder, wie beispielsweise Anordnungen mit federnd gelagerten Druckkontakten, nur begrenzt tolerant gegen beispielsweise hohe und/oder wechselnde Temperaturen, insbesonders über längere Zeiträume, mechanischen Erschütterungen, etc.

Eine Ankopplung über eine elektromagnetische Fernfeldkopplung erfordert in der Regel eine massive konstruktive Änderung, da eine vergleichsweise große externe Antenne integriert werden muss, sowie eine freie Funkstrecke zwischen Sender/Empfänger und dem SAW-Element, die z.B. bei einem relativ tief in einer metallischen Struktur eingebauten Sensor häufig nicht gewährleistet werden kann. Weiters sind bei Verwendung einer derartigen Anordnung die Betriebsfrequenzen auf (national unterschiedliche) ISM-Bänder eingeschränkt, was in Folge die maximal zulässigen Sendeleistungen limitiert.

Die dritte literaturbekannte Kopplungsmethode, über eine (induktive) Nahfeldkopplung zwischen zwei deckungsgleichen Schleifen, ist gleichfalls für einen praktischen Einsatz nicht geeignet. Der Einsatz einer derartigen Anordnung hätte zwar einen geringeren bis keinen negativen Einfluss auf das Nutzsignal und erfordert keine externen Antennen bzw. längere freie Funkstrecken, wäre aber, durch den zusätzlichen Platzbedarf für die interne Koppelantenne als auch durch die erforderliche, präzise Relativausrichtung von SAW-Element und Kopplungsspule, mit konstruktiven Änderungen verbunden und, sofern derartige Änderungen überhaupt möglich und zulässig sind, somit aufwändig und teuer.

Insgesamt stehen diese Einschränkungen einer praktischen Anwendung von SAW-Elementen, beispielsweise für Identifizierungs- bzw. Überwachungsaufgaben, in einer Reihe von Applikationen entgegen. Hier will die Erfindung Abhilfe schaffen.

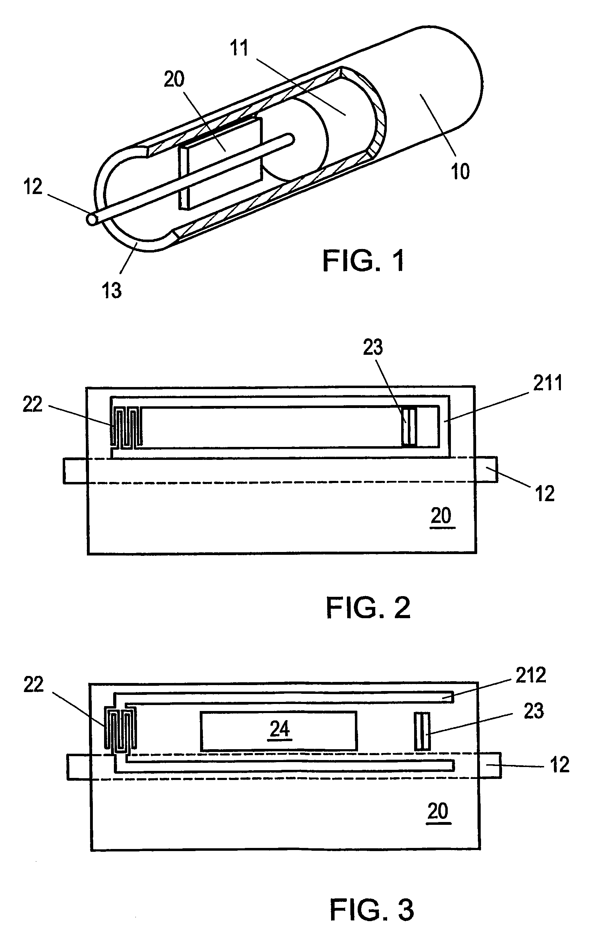

Der grundsätzliche Aufbau vieler Messwertaufnehmer ist ähnlich wie beispielsweise in der eingangs angesprochenen Literaturstelle von Bruckner et.al beschrieben (bzw. auch in Fig. 8 auf Seite 470 von "Sensor 2003 Proceedings" dargestellt) - (vgl. die den eingangs genannten Stand der Technik darstellende Fig. 1). Das aktive Element 11 ist über den Mittelleiter 12 eines Koaxialkabels mit der Steuerungs- bzw. Leseeinheit verbunden. Das Sensorgehäuse 10 bildet dabei, physikalisch betrachtet, einen Koaxialleiter 13 mit einer entsprechenden elektromagnetischen Feldverteilung. Damit können in das Gehäuse 10, welches vorzugsweise über ein Hochfrequenz-Koaxialkabel versorgt wird, ein oder mehrere SAW-Element(e) 20 kontaktfrei eingebaut und die Energieversorgung der SAW-Elemente, sowie die Rückübermittlung der in den SAW-Elementen generierten Signale, durch eine elektromagnetische Nahfeldkopplung des elektromagnetischen Felds im Koaxialleiter mit dem SAW-Element bewerkstelligt werden.

Eine derartige Anordnung hat für den gegenständlichen Anwendungsfall eine Reihe von Vorteilen im Vergleich zu anderen vorbekannten Systemen. Die Einkopplung des Signals erfolgt über das Koaxialkabel des Gast-Systems, wodurch eine sonst erforderliche, umfassende konstruktive Änderung des Gast-Systems vermieden werden kann. Die Kopplung erfolgt berührungsfrei, sodass eine Verfälschung von Nutzsignalen des Gast-Systems effektiv verhindert werden kann. Da das Feld in einem elektromagnetisch abgeschlossenen Raum generiert wird, ist es möglich und zulässig eine frei wählbare Frequenz bzw. einen Frequenzbereich zu verwenden, welche(r) für das SAW-Element besonders vorteilhaft ist und gleichzeitig die Funktion des Gast-Systems nicht beeinträchtigt. Die Sendeleistung kann dabei weitgehend beliebig an das System angepasst werden. Schließlich ist der Einbau in das Gast-System auf einfache Weise möglich, da im Gast-System keine zusätzlichen elektrisch leitfähigen Verbindungen hergestellt werden müssen und die Anforderungen an die Präzision der Ausrichtung vergleichsweise gering sind.

Nachteilig ist bei den bekannten Messwertaufnehmern der eingangs genannten Art aber der Umstand, dass die Einkoppeleffizienz der auf dem SAW-Element integrierten Koppelstruktur relativ gering ist, sodass die Signalqualität oft nicht ausreicht, um eine zuverlässige Identifikation bzw. Messdatenübermittlung auch unter ungünstigen Umgebungsbedingungen und über längere Zeiträume sicherzustellen.

Ein kritischer Faktor für die ordnungsgemäße Funktion des Messverfahrens ist also das Design der Kopplungsantenne auf dem SAW-Element. Vorbekannte Systeme mit auf dem SAW-Element integrierter Kopplungsstruktur sind wahlweise auf kapazitive Kopplung, wie in Fig. 3 dargestellt, oder auf eine transformatorische (induktive) Kopplung ausgelegt. Eine umfassende Einkoppelschleife, wie beispielsweise in der eingangs bereits erwähnten EP 0827105 dargelegt, ist für den gegenständlichen Anwendungsfall ungeeignet, da sich durch das zirkulare B-Feld in einem Koaxialleiter die induzierten Spannungen aufheben. Eine Lösung, bei der eine geschlossene Einkoppelschleife 211 auf einer Seite des Mittelleiters angeordnet wird, wie in Fig. 2 dargestellt, ist prinzipiell funktionsfähig, weist aber eine für praktische Anwendungen unzureichende Einkoppeleffizienz auf. Die gleiche Einschränkung gilt für die in Fig. 3 dargestellte kapazitive Einkoppelstruktur.

Aufgabe der vorliegenden Erfindung ist demgemäß , einen Messwertaufnehmer der eingangs genannten Art so auszubilden, dass die erwähnten Nachteile vermieden werden, und dass insbesonders mit einfachen Mitteln auch bei dem beschriebenen begrenzten Platzangebot eine Verbesserung der Einkoppeleffizienz und damit der Signalqualität erreicht werden kann.

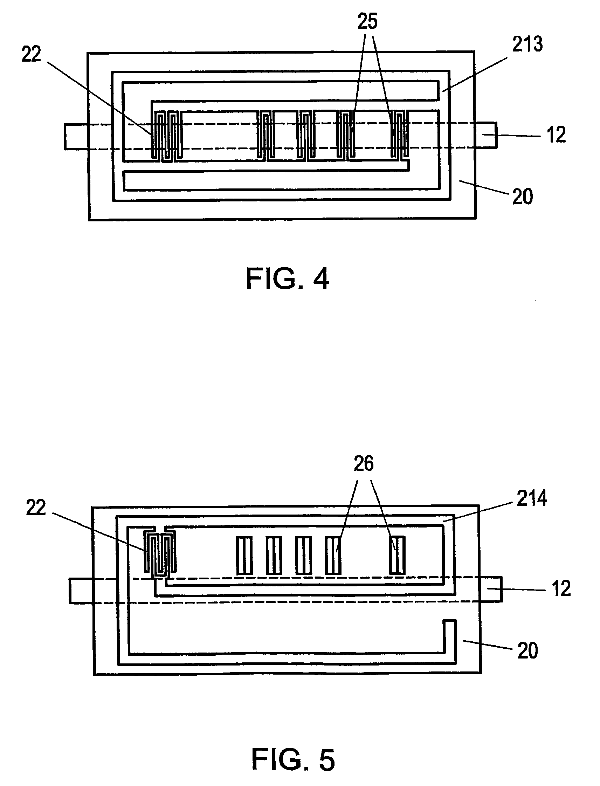

Diese Aufgabe wird gemäß der vorliegenden Erfindung bei einem Messwertaufnehmer der eingangs genannten Art dadurch gelöst, dass die Koppelstruktur des SAW-Elementes beidseits des Signalleiters angeordnete additiv koppelnde Teilstrukturen aufweist. Weitere Merkmale und die entsprechenden Vorteile der erfindungsgemäßen Ausgestaltungen sind im folgenden anhand der Zeichnungen und der dazugehörigen Figurenbeschreibung näher erläutert. Fig. 1 zeigt dabei wie bereits erwähnt den grundsätzlichen Aufbau eines Messwertaufnehmers gemäß Stand der Technik und Fig. 2 und 3 zeigen schematisch SAW-Elemente mit integrierter Koppelstruktur, wie sie in Messwertaufnehmern gemäß Fig. 1 zum Einsatz kommen können. Fig. 4 und 5 zeigen schließlich in der Darstellung Fig. 2 und 3 entsprechende Details von Messwertaufnehmern nach der vorliegenden Erfindung.

Zur Verbesserung der Einkoppeleffizienz für eine (vorwiegend) induktive Kopplung zwischen dem elektromagnetischen Feld des Koaxialleiters und SAW-Element wird gemäß Fig. 4 vorgeschlagen, die Interdigitalwandler (IDT) 22 sowie Reflektoren 23, 25, 26, Verzögerungsleitungen 24, etc. zwischen zwei eigenständige, verschränkt angeordnete schleifenförmige Koppelstrukturen 213 anzuordnen. Durch die Trennung in zwei gegenläufige Spulen ist es möglich, eine Addition der induzierten Ströme zu erreichen und dadurch die EnergieEinkopplung in das SAW-Element und somit die Signalqualität zu verbessern.

Eine weitere, für bestimmte Anwendungsfälle besonders geeignete Struktur der Einkoppelschleifen zielt auf eine kombinierte Einkopplung von Energie aus dem essentiell zirkularen magnetischen und dem essentiell radialen elektrischen Feld hin. Diese Multi-Funktionalität ist insbesonders von Relevanz, da es in vielen Gast-Systemen nicht möglich ist, einen für den Betriebsfrequenzbereich des SAW-Elements ausgelegten elektrischen Abschluss der Leitungskette zu gewährleisten. Dadurch entstehen in dem Koaxialleiter unkontrollierbare Feld-Inhomogenitäten, beispielsweise in Form von Energiebäuchen und Energieknoten. Eine SAW-Oberflächenstruktur, welche in der Lage ist beide Komponenten effektiv einzukoppeln, ist somit besonders vorteilhaft. Eine derartige Struktur 214 ist in Fig. 5 exemplarisch dargestellt. Der Aufbau ist asymmetrisch bezüglich des Mittelleiters 12 und gewährleistet eine optimale Ausnutzung von induktiver und kapazitiver Kopplung.

Die Strukturen auf dem SAW-Element stellen physikalisch einen RLC-Schwingkreis dar. Für eine effiziente Umsetzung der elektromagnetischen Anregungsenergie in eine akustische Oberflächenwelle ist es von essentieller Bedeutung, die Schwingeigenschaften des RLC-Kreises an die Betriebsfrequenz und die Materialeigenschaften des SAW-Elements anzupassen (Resonanzbetrieb). Dies erfolgt üblicherweise über eine Anpassung der L- und C-Glieder des Schwingkreises über externe Beschaltung mit Induktivitäten bzw. Kapazitäten, wie beispielsweise in DE 19851002 dargelegt. Dies steht einer Miniaturisierung entgegen. Weiters sind mit externen, diskreten Bauelementen hochtemperaturgeeignete SAW-Elemente, beispielsweise bis zu 400°C, nicht realisierbar. Für derartige Anwendungen ist bekannt, die induktiven und kapazitiven Eigenschaften durch geeignetes Design der Strukturen auf dem SAW-Element anzupassen. Beispiele umfassen eine Variation der Länge der Strukturen bzw. Breite der Microstrip-Leiterbahnen (Einfluss auf induktiven Anteil, L-Komponente), inklusive der Ausformung von mäandrierenden Strukturen, sowie eine Variation des Abstands zwischen den Microstrip-Leiterbahnen (Einfluss auf kapazitiven Anteil, C-Komponente).

Da für die gegenständlichen Anwendungen die Abmessungen des SAW-Elements in der Regel durch räumliche Vorgaben des Gast-Systems limitiert werden, sind derartige Anpassungen nur in stark eingeschränktem Ausmaß möglich. Mäanderstrukturen oder vergleichbare, raumgreifende Designs sind meist nicht (sinnvoll) realisierbar, und einer Variation der Länge bzw. des Abstands der Leiterbahnen sind durch die geometrischen Abmessungen der SAW-Elemente Grenzen gesetzt. Gemäß einer vorteilhaften Ausgestaltung der Erfindung wird eine Optimierung der Koppelschaltung über eine Anpassung des effektiven ohmschen Widerstandsteils R vorgeschlagen. Diese Anpassung wird vorzugsweise über eine Anpassung des Querschnitts der Leiterbahn vorgenommen, wobei, um den räumlichen Limitierungen Rechnung zu tragen, diese Querschnittsänderung besonders vorteilhafterweise über eine, auch teil- bzw. streckenweise, Variation der Schichtdicke der Leiterbahnen erreicht wird.

Eine weitere, für die Funktion eines SAW-Elements mit in die Oberflächenstruktur integrierter elektromagnetischer Einkoppelstruktur wichtige Maßnahme stellt eine Anpassung des Strahlungswiderstandes der, essentiell als Antenne zu betrachtenden, Einkoppelstrukturen an den Wellenwiderstand des Koaxialleiters dar. Dies ist in besonders einfacher und vorteilhafter Weise durch die erfindungsgemäße Anpassung der Schichtdicke der Oberflächenstrukturen oder von Teilen der Oberflächenstrukturen möglich. Beispielsweise ist es möglich, basierend auf der in Fig. 5 dargestellten Anordnung, durch geeignete Variation der Schichtdicke (von Teilen) der Leiterbahnen (nicht jedoch der Kammstrukturen, d.h. von Interdigitalwandlern und der Reflektoren, etc.) die Signalstärke um bis zu einer Größenordnung zu verbessern. Dazu wird auf eine, typischerweise als Schichtsystem aus mehreren Materialien bestehende Grundschicht eine oder mehrere Schichten eines leitfähigen Materials, z.B. reines Aluminium, aufgebracht. Typischerweise entspricht die Aufbringung dieser Zusatzschichten einer Erhöhung der Schichtdicke der Oberflächenstrukturen auf dem SAW-Element um einen Faktor 2 - 10.

Eine weitere vorteilhafte Ausformung der erfindungsgemäßen SAW-Oberflächenstrukturen beinhaltet die Integration einer Ableitschleife für pyroelektrische Ladungen. Pyroelektrische Effekte sind ein generelles Problem bei Hochtemperaturanwendungen von SAW-Elementen. Die Mehrzahl der verfügbaren, für Hochtemperatur-SAW-Anwendungen tauglichen Materialien mit guten Kopplungseigenschaften weisen pyroelektrische Eigenschaften auf, wobei es durch Temperaturgradienten entlang des SAW-Elements zum Aufbau von elektrischen Ladungen an den Oberflächen kommen kann. Die so entstehenden Spannungen können bis in den kV/cm-Bereich reichen. Bei plötzlichen Entladungen durch Überschläge sind die gespeicherten Energien ausreichend um Oberflächenstrukturen, beispielsweise Interdigitalwandler oder Reflektoren, zu zerstören und somit einen irreparablen Schaden an dem SAW-Element zu bewirken. Zur Vermeidung derartiger Aufladungen ist es sinnvoll, die Strukturen mit einer oder mehreren Ableitschleife(n) zu umgeben. Bei hochkompakt aufgebauten SAW-Elementen ist es sinnvoll, diese Ableitschleife(n) in die für den Betrieb des SAW-Elements erforderlichen Strukturen zu integrieren. Die Strukturen agieren somit gleichzeitig als LC-Schwingkreis für die hochfrequenten Betriebszustände des SAW-Elements und als Kurzschlussschleife für die Ausgleichsströme der pyroelektrischen Ladungsverschiebung.

Kontakte auf dem SAW-Element, wie sie beispielsweise für eine Funktionsprüfung vor dem Einbau benötigt werden, können vorteilhafterweise ebenfalls in die Strukturen für die Feldeinkopplung integriert werden.

Zusammenfassend stellen die beschriebenen Oberflächen-Strukturen für Verwendung auf einem SAW-Element sehr gut geeignete technische Lösungen für bislang ungelöste, die Anwendungsmöglichkeiten signifikant einschränkende Probleme in den Bereichen der berührungsfreien Nahfeldkopplung, der Anpassung der Schwingungscharakteristika und des Schutzes der Strukturen vor Beschädigung durch pyroelektrische Entladung dar.

## Patentansprüche

1. Messwertaufnehmer mit zumindest einem SAW-Element (20) als Sensor und/oder Identifikationseinheit, mit einem im wesentlichen einen Koaxialleiter bildenden Gehäuseteil (10), in dem das SAW-Element (20) kontaktfrei eingebaut ist, und der mit dem Schirm (13) des Anschlusskabels verbunden ist, dessen Signalleiter (12) berührungslos zumindest annährend mittig über einer oberflächlichen Koppelstruktur (213, 214) des SAW-Elementes (20) verläuft und zur Nahfeldkopplung des elektromagnetischen Feldes im Koaxialleiter mit dem SAW-Element (20) dient, **dadurch gekennzeichnet, dass** die Koppelstruktur (213, 214) des SAW-Elementes (20) beidseits des Signalleiters (12) angeordnete additiv koppelnde Teilstrukturen aufweist.

2. Messwertaufnehmer nach Anspruch 1, **dadurch gekennzeichnet, dass** die aktiven Bauelemente des SAW-Elementes (20), wie Interdigitalwandler (22), Reflektoren (23, 25, 26), Verzögerungsleitungen (24) und dgl., zwischen zwei im wesentlichen bezüglich des Signalleiters (12) gespiegelten eigenständigen, verschränkt angeordneten schleifenförmigen Teilstrukturen der Koppelstruktur (213) angeordnet sind.

3. Messwertaufnehmer nach Anspruch 1, **dadurch gekennzeichnet, dass** zur kombinierten Koppelung von Energie aus dem hauptsächlich zirkularen magnetischen und dem hauptsächlich radialen elektrischen Feld auf der einen Seite vom Signalleiter (12) eine vorrangig induktiv koppelnde Antennenstruktur und auf der anderen Seite eine vorrangig kapazitiv koppelnde Antennenstruktur als Teilstruktur der Koppelstruktur (214) angebracht ist.

4. Messwertaufnehmer nach einem der Ansprüche 1 bis 3, **dadurch gekennzeichnet, dass** die Teilstrukturen (213, 214) mit zumindest einer Leiterbahn das SAW-Element (20) im Umfangsbereich zumindest großteils umfassen und als integrierte Ableitschleife für pyroelektrische Ladungen dienen.

5. Messwertaufnehmer nach einem der Ansprüche 1 bis 4, **dadurch gekennzeichnet, dass** zur Anpassung an Betriebsfrequenz und/oder Materialeigenschaften und/oder Strahlungswiderstand der effektive ohmsche Widerstandsteil über eine Anpassung des Querschnittes der Leiterbahnen der Koppelstruktur (213, 214) veränderbar ist, vorzugsweise über eine zumindest bereichsweise Variation der Schichtdicke der aufgebrachten Leiterbahnen.

6. Messwertaufnehmer nach einem oder mehreren der Ansprüche 1 bis 5, **dadurch gekennzeichnet, dass** die Koppelstruktur (213, 214) des SAW-Elementes (20) zusätzliche Kontakte für Funktionsprüfungsgeräte oder dgl. aufweist.

## Claims

1. Measuring sensor with at least one SAW element (20) as a sensor and/or identification unit, and with a housing part (10) which essentially forms a coaxial conductor, has the SAW element (20) installed in it in a contact-free manner and is connected to the screen (13) of the connecting cable whose signal conductor (12) runs at least approximately centrally over a surface coupling structure (213, 214) of the SAW element (20) in a contactless manner and is used for the near-field coupling of the electromagnetic field in the coaxial conductor to the SAW element (20), **characterized in that** the coupling structure (213, 214) of the SAW element (20) has additively coupling partial structures which are arranged on both sides of the signal conductor (12).

2. Measuring sensor according to Claim 1, **characterized in that** the active components of the SAW element (20), such as interdigital transducers (22), reflectors (23, 25, 26), delay lines (24) and the like, are arranged between two independent loop-shaped partial structures of the coupling structure (213), which partial structures are essentially mirrored with respect to the signal conductor (12) and are arranged such that they are crossed.

3. Measuring sensor according to Claim 1, **characterized in that**, for the combined coupling of energy from the mainly circular magnetic field and the mainly radial electric field, a primarily inductively coupling antenna structure is fitted on one side of the signal conductor (12), and a primarily capacitively coupling antenna structure is fitted on the other side, as a partial structure of the coupling structure (214).

4. Measuring sensor according to one of Claims 1 to 3, **characterized in that** the partial structures (213, 214) at least largely encompass the SAW element (20) in the circumferential region with at least one interconnect and are used as an integrated discharge loop for pyroelectrical charges.

5. Measuring sensor according to one of Claims 1 to 4, **characterized in that**, in order to adapt to the operating frequency and/or material properties and/or radiation impedance, the effective nonreactive resistance can be changed by adapting the cross section of the interconnects of the coupling structure (213, 214), preferably by varying the layer thickness of the applied interconnects at least in certain regions.

6. Measuring sensor according to one or more of Claims 1 to 5, **characterized in that** the coupling structure (213, 214) of the SAW element (20) has additional contacts for function testing devices or the like.

## Revendications

1. Transducteur de mesure comprenant au moins un élément SAW (20) faisant office de détecteur et/ou d'unité d'identification, comprenant une partie de boîtier (10) formant pour l'essentiel un conducteur coaxial dans laquelle l'élément SAW (20) est intégré sans contact et qui est reliée avec le blindage (13) du câble de raccordement dont le conducteur de signal (12) s'étend sans contact au moins approximativement au centre sur une structure de couplage (213, 214) superficielle de l'élément SAW (20) et sert au couplage en champ proche du champ électromagnétique dans le conducteur coaxial avec l'élément SAW (20), **caractérisé en ce que** la structure de couplage (213, 214) de l'élément SAW (20) présente des structures partielles à couplage additif disposées des deux côtés du conducteur de signal (12).

2. Transducteur de mesure selon la revendication 1, **caractérisé en ce que** les composants actifs de l'élément SAW (20), tels que le convertisseur interdigital (22), les réflecteurs (23, 25, 26), les lignes à retard (24) et similaires, sont disposés entre deux structures partielles en forme de boucles de la structure de couplage (213), disposées pour l'essentiel individuellement en miroir par rapport au conducteur de signal (12) et entrecroisées.

3. Transducteur de mesure selon la revendication 1, **caractérisé en ce que** pour le couplage combiné de l'énergie provenant du champ magnétique principalement circulaire et du champ électrique principalement radial, une structure d'antenne à couplage prioritairement inductif est montée d'un côté du conducteur de signal (12) et une structure d'antenne à couplage prioritairement capacitif de l'autre côté, lesquelles font office de structure partielle de la structure de couplage (214).

4. Transducteur de mesure selon l'une des revendications 1 à 3, **caractérisé en ce que** les structures partielles (213, 214) entourent au moins en grande partie l'élément SAW (20) dans la zone périphérique avec au moins une piste conductrice et servent de boucle de dérivation intégrée pour des charges pyroélectriques.

5. Transducteur de mesure selon l'une des revendications 1 à 4, **caractérisé en ce que** pour l'adaptation à la fréquence de fonctionnement et/ou aux propriétés des matériaux et/ou à la résistance au rayonnement, la résistance ohmique effective peut être modifiée par une adaptation de la section transversale des pistes conductrices de la structure de couplage (213, 214), de préférence par le biais d'une variation au moins localisée de l'épaisseur de la couche des pistes conductrices appliquées.

6. Transducteur de mesure selon l'une ou plusieurs des revendications 1 à 5, **caractérisé en ce que** la structure de couplage (213, 214) de l'élément SAW (20) présente des contacts supplémentaires pour des appareils de contrôle du fonctionnement.
